## Europäisches Patentamt
## European Patent Office
## Office européen des brevets

(19)

(11) Publication number: **0 020 837**
**A1**

(12)

# EUROPEAN PATENT APPLICATION

(21) Application number: **79302556.0**

(51) Int. Cl.³: **E 02 B 15/04**

(22) Date of filing: **13.11.79**

(30) Priority: **15.06.79 GB 7920984**
**20.09.79 GB 7932568**

(43) Date of publication of application: **07.01.81**
**Bulletin 81/1**

(84) Designated Contracting States: **BE DE FR GB IT NL**

(71) Applicant: **SEACLEAN INC., 80, Broad Street, Monrovia (LR)**

(72) Inventor: **Hoff, George, P.O. Box 68, Kebayoran, Jakarta (ID)**
Inventor: **Crotti, Alfred Frank, Suite 2 5, Deanery Street, London, W.1. (GB)**

(74) Representative: **Allen, William Guy Fairfax et al, J.A. KEMP & CO. 14 South Square Gray's Inn, London WC1R 5EU (GB)**

(54) **Method and apparatus for dealing with oil spills.**

(57) An oil removing method includes distributing bird feathers throughout the oil to produce one or more coherent masses of feathers stuck together by adsorbed oil. The coherent masses may then be picked up or burned in situ. Apparatus for distributing feathers, a tubular casing for confining oil on water, and a boom device are also disclosed. The preferred feathers for use in the invention are washed and dried breast feathers, those from a hen chicken or hen turkey being particularly suitable.

EP 0 020 837 A1

1.

METHOD AND APPARATUS FOR DEALING WITH OIL SPILLS

This invention relates to a method and apparatus for picking up oil.

There have been numerous proposals made for picking up oil spilt on water. Spilt or discharged oil from tankers or other ships is a wide spread and worrying element in marine polution. moreover, it may also be necessary to remove oil spilt or accumulating on water in tanks, ponds, reservoirs, and other inland water-containing structures.

Present approaches to the problem basically focus on two possibilities. Firstly it has been proposed to disperse the oil with a detergent and secondly it has been proposed to attempt to confine the oil from spreading and to pick it up with various kinds of skimmer devices. For example, there have been proposals for two different kinds of skimmer device, namely that known as the "Framo" and that known as the "Vikoma". These are briefly described in the periodical "Offshore Engineer", June 1977, pages 27-28. Also, there has been a suggestion, in British Patent Specification No. 1 187 605, to use a conveyor for picking up an oil slick.

2.  0020837

The disadvantage of using detergents or dispersants is that detergents and dispersants are costly manufactured materials which utilise scarce natural resources in their manufacture. They are therefore economically relatively unattractive. A serious problem with skimmer devices is that they are usually large and complex mechanical contrivances, requiring considerable capital investment to manufacture and considerable engineering and maintenance effort to keep in fully satisfactory operational condition, bearing in mind the demanding conditions of use applicable on the seas and oceans of the world.

The present invention involves a radical new approach.

According to the invention, a method of picking up oil spilt on water includes distributing bird feathers throughout the oil to produce a coherent mass of feathers carrying and stuck together by adsorbed oil, and picking up the coherent mass in any suitable manner.

In a preferred version of the invention, bird feathers are distributed around the peripheral boundary of a slick or body of oil and water, in order to form a confining barrier which prevents the oil spreading. This is preferably done as a first step.

One may use feathers taken from the breast of a hen chicken but the invention is not regarded as limited to the use of such feathers.

The distribution of the feathers throughout the oil to be picked up is preferably done by stirring but other methods may be used; for example enclosing the feathers in a soluble container which dissolves in water and releases the feathers, as described later in this specification;  or by encasing the feathers in a
container which is exploded to release the feathers once it has
dropped to a predetermined depth in or through an oil slick.

The feathers used in the invention should preferably be
washed and dried feathers, that is to say feathers from which
substantially all, or at least most, of the preening oil has been
removed, and which have subsequently been dried.  Feathers
having a large ratio of surface area to weight are particularly
effective in the invention.  It has been found that to merely drop
untreated seabird feathers onto the top of an oil slick gives
unsatisfactory results and the method of the invention is not
regarded as including this rudimentary procedure.

The invention also provides apparatus for distributing feathers
over a substantial area.  Such apparatus includes a chamber for
containing compressed feathers and having a substantially constant
cross-sectional area, an open end and a closable end, the apparatus
also including means for supplying air or gas under pressure to a
space below the open end, and a mechanical agitator or rotating
cutter device at or near the open end.

The latter device may be a rotatable arm or a rotatable fan or
a rotatable cutter.  In use the chamber is filled with compressed
feathers and when it is desired to distribute them over an oil spill
the air or gas is supplied under pressure and the cutter is rotated.
In rotating it contacts and cuts the feathers at the lower end of
the chamber, so loosening and cutting them so that they peel or
are cut off from the compressed bulk of feathers, are fed into the
space, and are blown in the desired direction by the air or gas
under pressure.

4.

0020837

Further features of the invention will appear from the following description. These features are not to be regarded as limiting the invention.

The most preferred feathers for use in the method and apparatus of the invention are those known as purified curled chicken feathers, those from a hen bird used when washed being presently considered as the most satisfactory. The word "purified" is used to mean feathers which have been washed and sorted to be all of similar size and type. Those known as down feathers and marabou feathers are also satisfactory. The weight of feathers to be used may be approximately 1/14th to 1/20th of the weight of the oil, and for best results they should be scattered over and stirred into the oil of the slick. The weight of feathers used depends in part on the nature of the oil, particularly its viscosity. Per hundred weight units of oil to be picked up, the weight of feathers used should range from 3 to 12, with 4 to 10 being preferred and the most effective results be obtained with 6 to 8. The larger the average size of the feathers the more feathers will be required per unit weight of oil. The coherent mass so produced can then be lifted off the surface of the water by means of an expanded metal gauze, a fishing net, or other suitable perforated sheet. It is preferred to stir the feathers into the oil, and after the sticky cohesive mass has been removed, it may be put to use. For example, it may be burned to provide heat and energy or if desired the feathers may be recovered by washing off the oil with kerosene. It will often be found advantageous to compress the recovered mass, e.g. in a mangle-type device such as a roller press, in order to squeeze out some of the oil.    After washing the feathers, whether squeezed or not, with kerosene, the oil-kerosene mixture can be used as boiler fuel.    It has been found that some water is picked up with the cohesive mass but it is relatively small in quantity.    It is found that approximately 15% to 25% by weight of water is present in the cohesive sticky mass consisting mainly of feathers and oil.    If the coherent mass, i.e. the sludge, is allowed to drain after being lifted off the water, the water content is naturally reduced.    A centrifuge may be used to separate water from the oil-impregnated feathers.

It has been found that the weight of feathers required to pick up a given weight of oil is greater when the oil slick is widely dispersed than when it is concentrated over a small area.

The present invention envisages that, in practice, feathers of the required kind could be scattered on oil slicks at sea from a helicopter, and the downdraft of air from the helicopter rotor would effectively drive the feathers down onto the surface of the oil.    Naturally if conditions were windy, the feathers would be jettisoned from a point upwind of the slick.    It is also envisaged that confining "bolsters" consisting for example of feathers compressed into long tubular fabric casings could be used as booms and laid on the sea to confine the oil slick and prevent it spreading. When complete peripheral confinement has been obtained with such booms, each bolster could be automatically opened or exploded so releasing the feathers to act on the adjacent oil and bind it into the cohesive sticky mass referred to above. Thereafter, or simultaneously, further feathers could be dropped on the remainder of the oil so confined. The fabric used for the "bolsters" could be one which is soluble in either water or oil.

Also in accordance with the invention, one example of apparatus for dispensing feathers and one example of a boom device for collecting oil will now be particularly described by way of example, with reference to the accompanying drawings, in which:-

Figure 1 is a cross section taken in a vertical plane through one example of apparatus for dispensing and distributing feathers;

Figure 2 is a plan view of one example of a rotatable cutter included in the apparatus of Figure 1;

Figure 3 is a perspective view of a rotatable spider included in the apparatus of Figure 1;

Figure 4 is a cross section taken in a vertical plane through one example of a boom device for collecting oil on the surface of water; and

Figure 5 is a front elevation of the boom device shown in Figure 4.

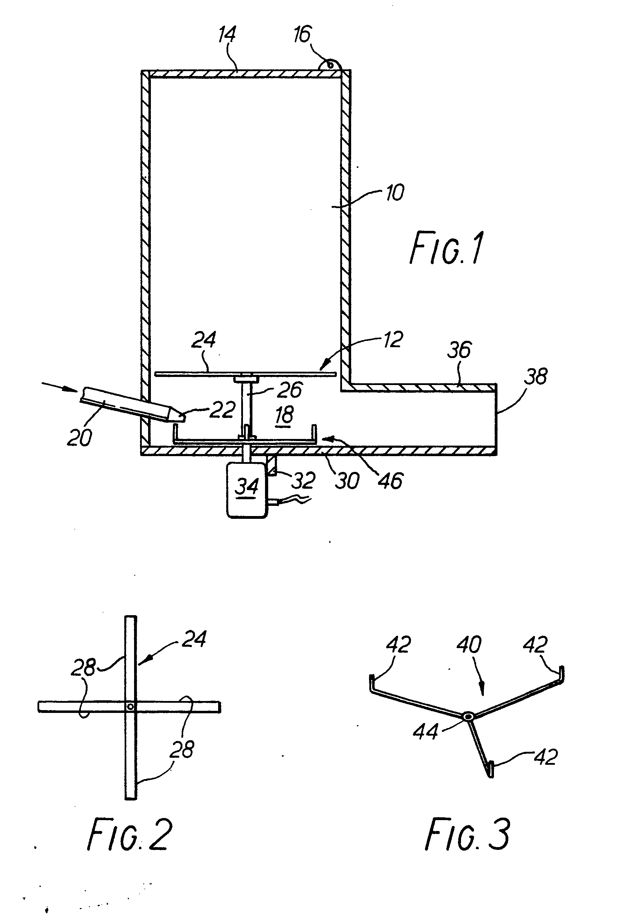

The illustrated apparatus for dispensing and distributing feathers includes a generally cylindrical chamber 10 having a substantially constant cross-sectional area. In the illustrated embodiment of the invention, the chamber is cylindrical, with an open end 12 and a closed end 14. In fact the closed end 14 is a door pivoted at 16 which can be opened to allow the chamber 10 to be loaded with compressed feathers. The open end 12 opens into a space 18 which, when the chamber 10 has its axis upright, is below the chamber 10. Means for supplying air or gas under pressure is connected to the closed end 14. One example of such means

7. 0020837

is diagrammatically indicated as a pipe 20 and nozzle 22, the pipe being connected to a pump or blower, not shown. A rotatable cutter 24 mounted on a shaft 26 is located at the lower end of the chamber 10 and divides it from the space 18. The cutter 24 may be a single straight blade, rotating about its mid-point, or may be a cross-blade form of cutter such as is shown in plan in Figure 2 wherein the blade edges are referenced 28. Attached to the lower end of a wall 30 of the space 18 is a bracket 32 which supports a motor 34 driving the rotatable shaft 26. This shaft 26 in its rotation passes the open end 12 and in use engages, cuts and agitates the feathers thereat. In this way, rotation of the cutter 24 causes these feathers at the lower end of the chamber 12 to be separated from the compressed bulk of feathers therein, and the fall or pass into the space 18. Compressed gas or air is supplied along the pipe 20 and as a result the feathers (or part-feathers) are blown out of the lateral exit passage 36 having an open end 38. With appropriate choice of air pressure, matters may be arranged so that a jet of feathers can be "sprayed" a distance of many feet. It is envisaged that use of this apparatus will enable feathers to be distributed at approximately the correct spacing over an oil slick. It is preferred to rotate the cutter 24 at about 50 revolutions per minute or more.

As an optional and not an essential feature of the invention, a rotatable spider 40 may be located in the space 18. It may take the form shown in the perspective view of Figure 3, having 3 radial arms at 120° to each other, each of which carries an upstanding peg 42 at its distal end, and possible other upstanding pegs (not shown). It has a boss 44 by which it is fixed to the shaft 26. Of course it need not be driven by the motor 34 but instead could be driven by a different motor if desired. Its function is to keep the feathers in space 18 in an agitated condition and especially to keep a build-up of feathers from blocking the exit zone indicated at 46.

The direction of the pipe and nozzle is preferably in the plane of the axis of the chamber 10 and at an angle of from 60 to 70° to the said axis. Around 70° has been found to be suitable.

It will be appreciated that the invention disclosed particularly herein offers considerable advantages over present methods of dealing with oil pollution. Firstly, it utilises a raw material, feathers, which is an unwanted by-product from food producers such as firms selling frozen chicken. Secondly, the oil recovered may if desired be separated from the feathers by the use of kerosene and used in any desired manner. Alternatively, the cohesive sticky mass of oil and feathers can be burnt directly, yielding useful energy. Thirdly, the method does not involve any adverse effects on wildlife such as sea birds, in contrast to the present use of detergents or dispersants. Fourthly, the invention is well adapted to use in confining polluting oil, as well as picking it up, and can be employed by either ships or aircraft. No expensive capital investment is required.

Further features of the invention will appear from the following. The method is based on the phenomenon that bird feathers for reasons which are not at present fully understood, will attract and bind oil particles and molecules to their surface.

It is therefore desirable to take advantage of this and other characteristics of feathers and provide a method using feathers to clear up or sweep oil from a water surface, such as occurs at sea in an oil spill. It is also possible to prevent oil from reaching coastlines and contaminating beaches.

The feathers being very light in weight and flexible can be compressed and concentrated into packages of varying sizes. The shape of the package so far as at present determined makes no difference, and according to one embodiment of the invention it is a feature of the packaging material that it is soluble in water. In accordance with this proposal, a container with an amount of feathers compressed therein and weighted in any suitable manner can be dropped directly on the surface of the oil slick and will penetrate and sink through the oil slick to reach the underlying water. The water will then dissolve the packaging material thereby releasing the feathers. The feathers being lighter than water will rise into the oil slick and process of attraction of the oil particles and molecules to the feathers will begin immediately on contact.

It has also been found that feathers though coated with an initial coat of the adsorbed oil will continue to attract the oil immediately surrounding them until they are totally saturated. The feathers saturated with oil can then be easily swept from the surface of the sea by mechanical means such as the boom device described later in this specification and, if desired, the oil may be reclaimed by treatment of the feathers. If it is not desired to reclaim the oil, or indeed to simply sweep the feathers from the sea, the feathers and oil can be burned. This is advantageous because it is known that oil on the surface of the sea is not always easily set alight and burned off, but by the use of this invention this disadvantage is overcome and once the oil has been adsorbed by the feathers, the feathers impregnated with oil can be easily burned while on the surface of the water.

It has been discovered that although feathers are effective to adsorb the oil and, through mechanisms which we do not fully understand, will clump together in such a manner that the feathers saturated with the oil can be readily removed from the water, the wind can cause difficulties in achieving an effective saturation of the feathers. For example, North Sea crude oil will spread very quickly over the surface of water and a breeze will shift an oil slick so rapidly that it will be extremely difficult to distribute the feathers onto and into it.   When feathers are distributed loosely from a boat or from a helicopter it is found that the wind will carry the feathers various distances onto the slick and away from the slick.   It happens also that individual feathers, being so light, will float down onto the surface of the oil and a strong wind will cause the feathers to bounce across the slick.   The effect of this is that the feathers may not be in sufficient contact with the oil and so may fail to agglomerate it into clumps.

We have now found that a preferred procedure is to loosely package the feathers in some mesh material.   In this way the distribution problem is solved and many unexpected secondary benefits result.   By mesh material we mean non-woven, woven or interwoven material which may be synthetic fibre, such as nylon, or natural fibre.   An important feature is that the material must have interstices or openings sufficiently large to permit oil to pass through and contact and saturate the feathers, yet sufficiently small to prevent escaping any substantial quantity of the feathers.   The size of the openings may be such that each opening has a maximum dimension in the range 1.5 to about 20 millimetres but it will be understood that the preferred value will depend on the size of feathers to be enclosed.   For example, any selected weight of feathers (which may be chosen in relation to the weight of spilled oil as taught in the foregoing Specification) can be packaged loosely in ordinary mesh material.   In the tests we have made, we used nylon mesh that is normally employed in the blocking of hats.   The feathers were distributed in a more or less flat manner but we did not find this to be crucial.   The feathers however should not be packed too tightly into these mesh-like bags, but rather loosely enough to shift about when agitated by the movement of the wind or sea.   In volume terms from about 1/3 to 2/3 of the volume of the bag should be initially filled by the feathers in their normal uncompressed state.   This is quite similar to a typical "tea-bag" configuration.   Any amount of feathers, for example from 8 to 24 ounces, can be so packaged in a mesh-like bag of appropriate size.   These packed bags can be easily stored one on top of the other. When the bags were distributed on an oil slick comprised of North Sea crude oil, it was found that each bag was simply moved by the wind in a desirable manner across and on the surface of the oil slick. Without further agitation, each bag of feathers slowly absorbed the oil with which it was in contact and the increasing weight of the bag pressing on the oil was found to be helpful in speeding up the adsorption of the oil, probably due to the improving contact with the oil. In addition to the effect of the wind, the movement of the sea helps to toss the bag about and thereby more quickly exposes the feathers to contact with the oil. After a few minutes it was found that the bags of feathers were saturated with the oil and could be easily removed. We believe that such bags could be effectively used with helicopters or any other vehicle or vessel from which the bags can be off-loaded onto the surface of the slick with little or no disadvantageous interference by the wind. It has been discovered that unlike other known methods of treating oil slicks, heavy seas are beneficial to this method of removing oil from the surface of water.

This embodiment of the invention can be useful for the prevention of contamination of coastlines and beaches. Bundles of feathers enclosed in such net-like bags or in "sausages" or "bolsters" which are in effect elongated bags made of a material permeable to oil. These elongated bags can be linked to each other in chains and can be anchored off-shore. The thus-contained feathers will then act as a barrier to an oil slick approaching the coastline. Indeed, the feathers will act more than just as a barrier; they will adsorb the oil in contact with them. When the bundles of feathers have become entirely saturated with the oil, they can either be burned or removed as desired. It will be appreciated that this method will be particularly suitable for the protection of selected fishing grounds or selected bays, so protecting wildlife, bird sanctuaries, holiday resorts, for example, at the same time as actually removing some of the oil from the sea.

According to a preferred version of this embodiment of the present invention, there is provided a boom device for collecting oil on water which comprises the following essential features: a sausage-like bag or "bolster" (also called a tubular casing herein) filled with feathers and made of a porous or apertured or net-like material and which can float on water with a lower portion thereof immersed, means for connecting the device to a pair of tow lines or to two adjacent boom devices, and an elongate skirt extending generally vertically downward from the bag along its length and serving in use, to catch any oil which may find its way underneath the bag.

Among the preferred feathers for use in the device of the invention are those known as purified curled chicken feathers, those from a hen bird used when washed, and particularly the breast feathers, being presently considered especially satisfactory. Those known as down feathers and marabou are also satisfactory.

The height of the skirt may be from about 2/3 to three times the average diameter of the sausage-like bag. The latter may be made from nylon net material or any other suitable natural or synthetic fibres woven or otherwise formed into a configuration providing apertures which allow ingress of floating oil to the feathers within the bag. The minimum transverse dimension of each such aperture may be about one to two millimetres.

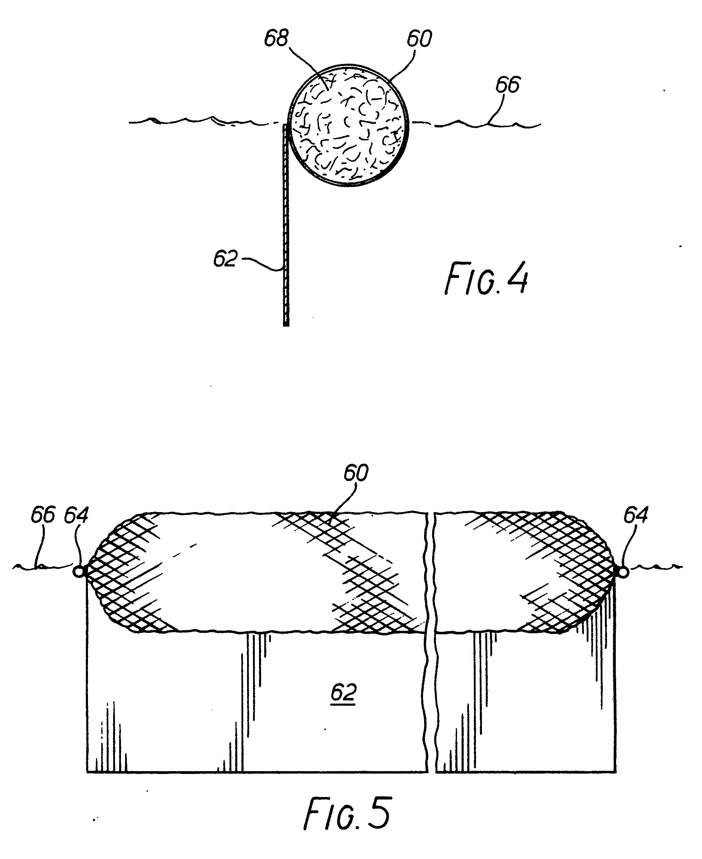

The skirt may be unitary or may be made up of joined sections. It may be made of a flexible material with a synthetic plastics material being preferred. It is flexible to accommodate enforced shape changes when the boom device is being towed, or is subjected to rough seas. It may be secured tangentially to the "bolster", in the manner illustrated in Figure 4. When towed by a pair of lines one attached to each end of the bolster, the boom device takes up an arcuate shape as seen in plan, as the "bolster" is non-rigid in construction.

An advantage of the employment of a downwardly-extending skirt is that when the boom device is being towed through an oil slick upon which feathers have been scattered, any feathers tending to pass beneath the boom will be caught by the skirt and will be maintained in contact with the oil beneath and adjacent to the bolster. The turbulence of the water-oil mixture as the boom and skirt are towed through it also assists in ensuring a thorough intermingling between oil and feathers and "clumping" or aggregation is thus promoted.

Referring now to a particular embodiment illustrated in Figures 4 and 5, there is shown a tubular casing 60 of nylon net material having holes with a maximum dimension of about 15 millimetres. The casing contains feathers 68. The hole shape is not critical. To the casing is secured a downwardly-depending flexible skirt 62, this being located tangentially of the casing 60. At each end of the casing a ring or eye 64 is provided so that a tow line can be connected to each end. The skirt 62 may be of sheet polyvinyl chloride or any other suitable flexible material. The surface of the water upon which the boom device floats in use is seen at 66. In an alternative construction, not illustrated, the skirt could depend from the lowermost part of the tubular casing.

Although a method has been described above in which the feathers are compressed within a water soluble material and are then dropped or placed on the surface of the oil and sink to the water beneath the oil, there is yet another variation within the broad concept of the invention. The feathers can be packaged in mesh-like bags, bolsters or sausages as described above. These bags can themselves be dropped directly on the surface of an oil slick. The oil will then penetrate the interstices of the enclosing material. The feathers contained in the bags will eventually become totally saturated with oil and can be removed or burned as desired. In this procedure, one can use a net-like material which is a watersoluble substance. As the oil is being adsorbed through the interstices, the enclosing material will eventually be dissolved by water it encounters, thereby releasing the feathers from the enclosing material and enabling them to come into contact with further oil. It is clear that yet another alternative is to use enclosing material which is dissolved by the oil itself and not necessarily only by water.

In either case, whether the enclosing material is soluble in water or in oil; the feathers will be released into contact with the oil to be adsorbed. We have also discovered that feathers which have been dyed by known techniques using basic dyes or acid dyes seem to be at least as effective in adsorption of the oil as the same feathers undyed. We have used chicken feathers which had been dyed red and found that when these feathers were placed into contact with the oil they apparently adsorbed the oil at least as well and in cases more quickly than white undyed chicken feathers. We found that the dyed feathers worked in the same manner when put into bags either alone or mixed with the undyed white feathers.

It is also feasible to fashion a carpet-like bed of feathers which can be lain on slicks. In this example feathers are inserted into or fixed in a mesh-like substrate by any suitable manner. It can be the same mesh material described above so long as there is sufficient porosity between and through the substrate from one side of the substrate to the opposite side to permit the oil to penetrate and coat sides of the feathers other than those in direct facing contact with the oil when the substrate is laid on the water. In other words the substrate is similar to a carpet configuration with the difference that it has no backing and oil may pass through it from one side to the other.

CLAIMS

1.    A method of picking up oil spilt on water which includes distributing bird feathers throughout the oil to produce a coherent mass of feathers carrying and stuck together by adsorbed oil, and picking up the coherent mass in any suitable manner.

2.    A method according to claim 1 in which the feathers are distributed around the peripheral boundary of a slick or body of oil and water, in order to form a confining barrier which prevents the oil spreading.

3.    A method according to claim 1 or 2 in which the feathers used are washed and dried feathers taken from a chicken or a turkey; or are breast, down, or marabou feathers taken from a hen chicken or hen turkey; or are predominantly washed and dried curled chicken feathers from a hen bird.

4.    A method according to claim 1, 2 or 3 in which the weight of feathers used is approximately 1/14th to 1/20th by weight of the weight of the oil, and the feathers are scattered over the oil and stirred or agitated thereinto.

5.    Apparatus for distributing feathers over a substantial area including a chamber for containing compressed feathers and having a substantially constant cross-sectional area, an open end and a closed end, means for supplying air or gas under pressure in the region of the open end, and a mechanical agitator or cutter device at or near the open end.

6.    Apparatus according to claim 5 in which the agitator of cutter device is a rotatable blade.

7.    Apparatus according to claim 5 or 6 including an exit chamber in communication with the open end of the first mentioned chamber, and a rotatable agitator additional to the mechanical agitator or cutter device and located in the exit chamber.

8.    Apparatus according to claim 7 in which an air pipe terminating in a nozzle extends into the exit chamber and is directed towards an exit orifice thereof.

9.    A tubular casing suitable for forming a confining barrier to prevent an oil slick on water from spreading, said casing containing feathers which are predominantly purified curled hen bird feathers.

10.    A method of removing oil on salt water or fresh water, comprising capturing the oil by distributing selected bird feathers, preferably washed and dried chicken or turkey feathers, on and into the oil, stirring or agitating the feathers into the oil so that they adsorb the oil and agglomerate into clumps, and then removing the clumps.

11.    A modification of the method according to claim 10 in which the agglomerated clumps are removed by being burnt in situ.

12.    A tubular casing according to claim 9, in which the casing is of net material or at least a portion of the casing apertured, so as to allow ingress of the oil to the feathers contained in the casing.

13.    A tubular casing according to claim 9 or 12 including an elongated flexible skirt extending downwardly from the casing along its length.

14.    A carpet-like bed of feathers carried by an oil-permeable substrate and capable of adsorbing oil from the surface of water when the substrate is dragged thereover with the feather side facing downwardly.

FIG.1

FIG.2

FIG.3

0020837

68   60   66

62

*FIG.4*

60

66 64   64

*62*

*FIG.5*

European Patent Office

**EUROPEAN SEARCH REPORT**

0020837
Application number

EP 79 30 2556

| Category | DOCUMENTS CONSIDERED TO BE RELEVANT | | CLASSIFICATION OF THE APPLICATION (Int. Cl.3) |
|---|---|---|---|
| | Citation of document with indication, where appropriate, of relevant passages | Relevant to claim | |
| | <u>US - A - 3 800 950</u> (HESS)<br>  * Abstract; column 3, lines 65-68; column 4, lines 1-32; figures 1,2 * | 1,2,5<br>6,8 | E 02 B 15/04 |
| | <u>NL - A - 66 04877</u> (MOTAN)<br>  * Page 8, lines 8-34; page 9, lines 1-13; figures 1,3 * | 1,5 | |
| | <u>DE - A - 1 942 930</u> (SECURICUM)<br>  * Page 3; figures 1,2,8,9 * | 9,12,13 | TECHNICAL FIELDS SEARCHED (Int. Cl.3) |
| | <u>CH - A - 484 329</u> (MULLER)<br>  * Column 3, lines 59-67; column 4, lines 1-26; figures 1,2 * | 1,11 | E 02 B<br>E 01 H |
| A | <u>DE - B - 1 292 086</u> (MICHELS)<br>  * Column 2; figures * | 1 | |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 25-09-1980 | HANNAART |

EPO Form 1503.1  06.78